# EUROPÄISCHE PATENTSCHRIFT

(11) **EP 1 809 404 B1**
(45) Veröffentlichungstag und Bekanntmachung des Hinweises auf die Patenterteilung: **27.06.2012**
(21) Anmeldenummer: 05801993.6
(22) Anmeldetag: 08.11.2005
(51) Int. Cl.: B01D 46/12, B01D 46/24, B01D 46/40, F01N 3/022, F01N 3/021, B01D 39/20

(54) **FILTERPLATTE FÜR EINEN PARTIKELFILTER**
FILTRATION PLATE FOR A PARTICLE FILTER
PLAQUE FILTRANTE POUR FILTRE A PARTICULES

(30) Priorität: 10.11.2004 DE 102004054158
(43) Veröffentlichungstag der Anmeldung: 25.07.2007
(73) Patentinhaber: Daimler AG, 70327 Stuttgart (DE)
(72) Erfinder: FELDER, Hubert, 59439 Holzwickede (DE)
(74) Vertreter: JENSEN & SON
(86) Internationale Anmeldenummer: PCT/EP2005/011906
(87) Internationale Veröffentlichungsnummer: WO 2006/050894

(56) Entgegenhaltungen:
- WO-A-00/70206
- DE-A1- 4 022 321
- DE-A1- 4 029 749
- DE-A1- 10 106 769
- DE-A1- 19 503 067
- DE-C1- 19 810 738
- US-A- 5 853 902

## Beschreibung

Die Erfindung betrifft eine Filterplatte für einen zur Abscheidung von Partikeln aus einem Abgasstrom einer Brennkraftmaschine dienenden Partikelfilter nach der im Oberbegriff von Anspruch 1 näher definierten Art. Des weiteren betrifft die Erfindung einen Partikelfilter zur Abscheidung von Partikeln aus einem Abgasstrom einer Brennkraftmaschine.

Aus der DE 42 34 930 A1 ist ein Filter zum Abscheiden von Verunreinigungen aus Abgasen bekannt, der einen Filterkörper mit einer Vielzahl von aus gesintertem Metallpulver bestehenden Filterplatten aufweist, die so angeordnet sind, dass sie eine Vielzahl von nebeneinander liegenden Strömungskanälen bilden. Die einzelnen Filterplatten sind wellenförmig geprägt und werden in Längsrichtung durchströmt. Diese Wellenform der Filterplatten führt zu jeweils gegeneinander abgegrenzten Längskanälen, die sich sehr schnell mit Asche verstopfen und somit die Wirkung des Filters beeinträchtigen können. Des weiteren ergibt sich durch die derart ausgeprägten Kanäle eine sehr stark gerichtete Strömung, die eine Verteilung über die Ebene der Filterplatten verhindert und so zu einem erhöhten Abgasgegendruck führt. Ein weiterer Nachteil der bekannten Filterplatten liegt in ihrer geringen Steifigkeit, die die Handhabung derselben zum Teil erheblich erschwert und ihre Dauerhaltbarkeit beeinträchtigen kann.

Einen weiteren Partikelfilter beschreibt die WO 02/102494 A1. Dabei sind um den Umfang einer zentralen Bohrung sternförmig mehrere Filtertaschen angeordnet, die einen dreieckigen Querschnitt aufweisen und in die ein Distanzelement eingesetzt ist, welches eine Verformung der Filtertaschen durch den Abgasdruck verhindern soll. Dieses auch als "spacer" bezeichnete Distanzelement ist jedoch ein zusätzliches Bauteil, welches einen zusätzlichen Aufwand bei der Fertigung des Partikelfilters darstellt. Des weiteren muss bei der Auslegung des Distanzelements darauf geachtet werden, dass dieses kein Hindernis für den Abgasstrom darstellt, da es ansonsten eine Erhöhung des Abgasgegendrucks verursachen würde.

Bei dem Partikelfilter gemäß der DE 101 28 938 A1 weisen die Filterplatten jeweilige Ausprägungen auf, die eine Abstützung der Filterplatten zueinander bewirken sollen.

Da die Filterplatten meist mit einer bestimmten Vorspannung als Filterkörper in ein Filtergehäuse eingebaut werden und bei der in den meisten Fällen gegebenen liegenden Einbaulage die Filterplatten durch ihr Eigengewicht sowie durch den Abgasdruck zusätzlich zusammengepresst werden, kann der sich zwischen den Filterplatten befindliche Raum sehr leicht verkleinert und sogar vollständig eliminiert werden, sodass eine erhebliche Behinderung der Strömung zu verzeichnen ist. Dies kann auch mit der Lösung gemäß der DE 101 28 938 A1 nicht zuverlässig verhindert werden.

Aus der DE 101 06 769 A1 ist ein aus Filterscheiben aufgebauter Partikelfilter bekannt, bei welchem die Filterscheiben Einbuchtungen und Ausbuchtungen aufweisen, die der Abstandshaltung zur jeweils benachbarten Filterscheibe dienen. Die Einbuchtungen und Ausbuchtungen sind räumlich voneinander getrennt und mit Abstand zueinander auf einer jeweiligen Filterscheibe angeordnet.

Es ist Aufgabe der vorliegenden Erfindung, eine Filterplatte für einen Partikelfilter zu schaffen, bei der, wenn sie mit einer weiteren Filterplatte einen Ein- oder Ausströmkanal bildet, stets ein für eine gute Durchströmung ausreichender Zwischenraum gegeben ist. Des weiteren sollte die Gestaltung der Filterplatte ein möglichst geringes Hindernis für den Abgasstrom darstellen.

Erfindungsgemäß wird diese Aufgabe durch die in Anspruch 1 genannten Merkmale gelöst.

Das Distanzelement der erfindungsgemäßen Filterplatte weist eine sich von dem Flächenbereich weg erstreckende, innere Erhöhung oder Vertiefung und eine die innere Erhöhung oder Vertiefung umgebende, sich in der Gegenrichtung der inneren Erhöhung oder Vertiefung von dem Flächenbereich weg erstreckende äußere Vertiefung oder Erhöhung auf. Auf diese Weise ergibt sich ein Distanzelement, welches sich auf beide Seiten des Flächenbereichs der Filterplatte erstreckt, so dass, wenn zwei oder mehr dieser Filterplatten zu einem Filterkörper zusammengefasst werden, stets eine gegenseitige Berührung der Distanzelemente gewährleistet ist. Auf diese Weise wird ein Zusammenpressen von benachbart zueinander angeordneten Filterplatten verhindert und eine Durchströmbarkeit der Filterplatten zu jeder Zeit gewährleistet.

Dies gilt insbesondere dann, wenn über den Flächenbereich eine Vielzahl von Distanzelementen verteilt angeordnet sind.

Unter einem Distanzelement wird dabei hier ein definierter Teilbereich einer jeweiligen Filterplatte verstanden, welcher aufgrund seiner Struktur die Aufrechterhaltung eines Abstands benachbarter Filterplatte bewirkt.

Ein Partikelfilter zur Abscheidung von Partikeln aus einem Abgasstrom einer Brennkraftmaschine mit mehreren nebeneinander angeordneten Filterplatten ist in Anspruch 6 angegeben.

Ein derartiger Partikelfilter nutzt sämtliche Vorteile der erfindungsgemäßen Filterplatte, so dass stets eine Durchströmbarkeit der Ein- und Ausströmkanäle gewährleistet ist.

Dabei kann in vorteilhaften Ausgestaltungen des Partikelfilters vorgesehen sein, dass die Distanzelemente derart auf den Filterplatten angeordnet sind, dass sich die Distanzelemente benachbarter Filterplatten gegenseitig berühren, und dass die Filterplatten eine derartige Anordnung zueinander aufweisen, dass jeweils eine innere Erhöhung der einen Filterplatte auf der inneren Vertiefung der benachbarten Filterplatte oder eine äußere Vertiefung der einen Filterplatte auf der äußeren Erhöhung der benachbarten Filterplatte zu liegen kommt.

Mit einer derartigen Konfiguration ist sichergestellt, dass die oben angegebenen Vorteile der erfindungsgemäßen Filterplatten durch den erfindungsgemäßen Partikelfilter in vorteilhafter Weise genutzt werden.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Dabei zeigen:
- Fig. 1: eine Draufsicht auf eine erfindungsgemäße Filterplatte; und
- Fig. 2: einen Schnitt nach der Linie II-II aus Fig. 1.

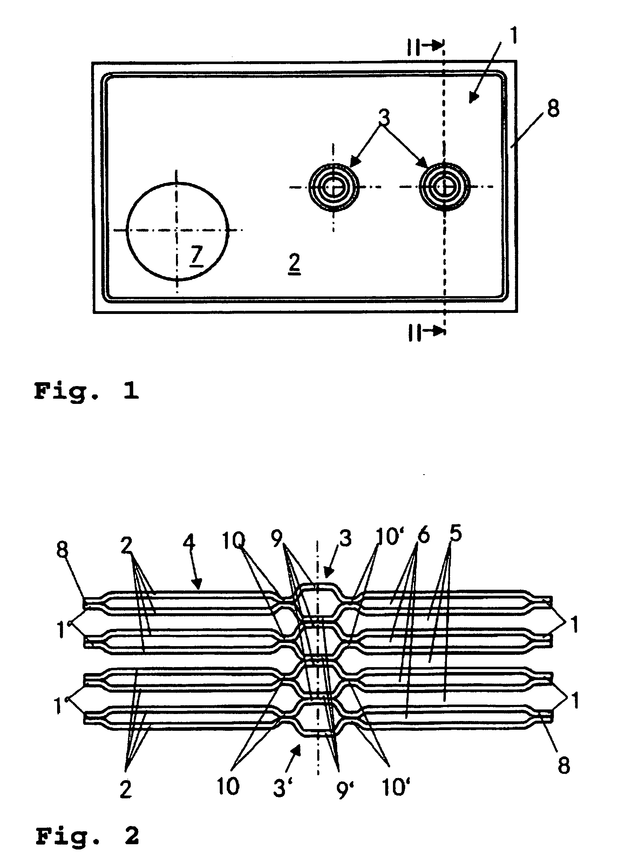

Fig. 1 zeigt eine Filterplatte 1, welche zur Bildung eines in seiner Gesamtheit nicht dargestellten, zur Abscheidung von Partikeln aus einem Abgasstrom einer Brennkraftmaschine dienenden Partikelfilters verwendet wird. Der Einsatzort, der sich vorzugsweise innerhalb einer Abgasanlage der Brennkraftmaschine befindet, und die Wirkungsweise eines derartigen Partikelfilters ist prinzipiell in der DE 42 34 930 A1 beschrieben, weshalb nachfolgend nicht näher darauf eingegangen wird.

Die Filterplatte 1 besteht im wesentlichen aus einem mit Sintermetallpulver beschichteten, gasdurchlässigen Trägermaterial und weist einen sich im wesentlichen in einer Ebene, nämlich im vorliegenden Fall in der Bildebene, erstreckenden Flächenbereich 2 auf. Um bei der Anordnung von zwei oder mehrerer derartiger Filterplatten 1 über- bzw. nebeneinander, wie in Fig. 2 dargestellt, einen Abstand der Filterplatten 1 voneinander herzustellen und im Betrieb des Partikelfilters aufrechtzuerhalten, so dass ein unerwünschter Kontakt von benachbarten Filterplatten 1 verhindert wird, sind auf dem Flächenbereich 2 mehrere Distanzelemente 3 vorgesehen, deren Aufbau nachfolgend unter Bezugnahme auf Fig. 2 erläutert wird. Über den Flächenbereich 2 der Filterplatten 1 können beliebig viele Distanzelemente 3 angeordnet sein und es ist auch möglich, diese Distanzelemente 3 mit weiteren, hierin nicht näher beschriebenen Distanzelementen zu kombinieren.
In Fig. 2 ist ein Teil eines Filterkörpers 4 dargestellt, welcher durch eine parallele Aneinanderreihung bzw. Aufeinanderschichtung einzelner Filterplatten 1 und 1' gebildet wird und gemeinsam mit weiteren bekannten und daher nicht dargestellten Bauteilen den Partikelfilter bildet. Hierdurch ergeben sich abwechselnde, auch als Filtertaschen bezeichnete Einströmkanäle 5 und Ausströmkanäle 6, wobei jeweils spiegelbildlich zueinander ausgebildete Filterplatten 1 und 1' abwechselnd einen Einströmkanal 5 und einen Ausströmkanal 6 bilden. Durch den Übertritt des Abgasstroms von einem der Einströmkanäle 5 durch die Filterplatte 1 bzw. 1' in einen der Ausströmkanäle 6 werden Partikel, insbesondere Rußpartikel, aus dem Abgasstrom abgeschieden. Um dem Abgasstrom ein Einströmen zwischen die Filterplatten 1 und 1' zu ermöglichen und gleichzeitig das Abströmen nur durch eine in Fig. 1 dargestellte Bohrung 7 zuzulassen, sind die Ausströmkanäle 6 an Rändern 8 der Filterplatten 1 miteinander verbunden. Diese Verbindung kann vorzugsweise durch eine Verschweißung vorgenommen werden, beispielsweise mit dem an sich bekannten WIG-Schweißverfahren.

Bei der nachfolgenden Erläuterung des Aufbaus der Distanzelemente 3 wird zunächst auf die in Fig. 2 oben angeordnete Filterplatte 1 Bezug genommen. Hierbei ist erkennbar, dass das Distanzelement 3 eine sich von dem Flächenbereich 2 nach oben weg erstreckende, innere Erhöhung 9 und eine die innere Erhöhung 9 umgebende, sich nach unten, also in Gegenrichtung der inneren Erhöhung 9 von dem Flächenbereich 2 weg erstreckende äußere Vertiefung 10 aufweist. Wie in Fig. 1 erkennbar, umgibt die äußere Vertiefung 10 die innere Erhöhung 9 an ihrem gesamten Umfang und ist im wesentlichen ringförmig ausgebildet, wohingegen die innere Erhöhung 9 im wesentlichen kreisförmig ausgebildet ist. Gegebenenfalls wäre auch eine Ausführungsform denkbar, bei der die äußere Vertiefung 10 die innere Erhöhung 9 nur teilweise umgibt. Des weiteren sind auch andere Formen der inneren Erhöhung 9 und der äußeren Vertiefung 10 denkbar.

Die äußere Vertiefung 10 schließt sich unmittelbar an die innere Erhöhung 9 an, so dass, ausgehend von der inneren Erhöhung 9 das mittlere Niveau des Flächenbereichs 2 erst wieder außerhalb der äußeren Vertiefung 10 erreicht wird.

Die unterhalb der oberen Filterplatte 1 angeordnete Filterplatte 1' weist ein spiegelbildlich zu dem Distanzelement 3 der Filterplatte 1 ausgebildetes Distanzelement 3' auf. Das Distanzelement 3' weist also eine sich von dem Flächenbereich 2' nach unten weg erstreckende, innere Vertiefung 9' und eine die innere Vertiefung 9' umgebende, sich nach oben, also in Gegenrichtung der inneren Vertiefung 9' von dem Flächenbereich 2' weg erstreckende äußere Erhöhung 10' auf. Auch die äußere Erhöhung 10' umgibt die innere Vertiefung 9' an ihrem gesamten Umfang und schließt sich unmittelbar an dieselbe an. Des weiteren ist auch die innere Vertiefung 9' im wesentlichen kreisförmig und die äußere Erhöhung 10' im wesentlichen ringförmig ausgebildet.

Um die beschriebene Konfiguration der Filterplatten 1 und 1' so nutzen zu können, dass auch während des Einsatzes des Partikelfilters eine gleichbleibende Höhe der Einströmkanäle 5 und der Ausströmkanäle 6 gewährleistet ist, sind die Distanzelemente 3 und 3' derart auf den Filterplatten 1 und 1' angeordnet, dass sich die Distanzelemente 3 und 3' benachbarter Filterplatten 1 und 1' gegenseitig berühren. In Fig. 2 berühren sich die äußere Vertiefung 10 der oberen Filterplatte 1 und die äußere Erhöhung 10' der darunter liegenden Filterplatte 1', so dass die Versteifung des oberen Ausströmkanals 6 gewährleistet ist. Dagegen berühren sich bei der zweiten Filterplatte 1' von oben und der darunter liegenden Filterplatte 1 die innere Vertiefung 9' der oberen Filterplatte 1' und die innere Erhöhung 9 der darunter liegenden Filterplatte 1. Bei dem durch diese beiden Filterplatten 1' und 1 gebildeten Einströmkanal 5 ist die Versteifung somit durch die innere Vertiefung 9' und die innere Erhöhung 9 gewährleistet. Gleiches gilt auch für die darunter liegenden Filterplatten 1 und 1', die jeweils abwechselnd die Einströmkanäle 5 und die Ausströmkanäle 6 des Filterkörper 4 bilden.

## Patentansprüche

1. Filterplatte für einen zur Abscheidung von Partikeln aus einem Abgasstrom einer Brennkraftmaschine dienenden Partikelfilter, welche im Wesentlichen aus einem mit Sintermetallpulver beschichteten, gasdurchlässigen Trägermaterial besteht und einen sich im Wesentlichen in einer Ebene erstreckenden Flächenbereich aufweist, auf dem sich wenigstens ein Distanzelement (3, 3') befindet, welches eine sich von dem Flächenbereich (2) in eine Richtung weg erstreckende, innere Erhöhung (9) oder Vertiefung (9') aufweist,
**dadurch gekennzeichnet,**
**dass** die innere Erhöhung (9) oder Vertiefung (9') in einer Draufsicht auf die Filterplatte gesehen eine im Wesentlichen kreisförmigen Fläche aufweist und das wenigstens eine Distanzelement (3, 3') ferner eine die innere Erhöhung (9) oder Vertiefung (9') zumindest teilweise umgebende, sich in Gegenrichtung der inneren Erhöhung (9) oder Vertiefung (9') von dem Flächenbereich (2) weg erstreckende äußere Vertiefung (10) oder Erhöhung (10') aufweist, wobei sich die äußere Vertiefung (10) oder Erhöhung (10') unmittelbar an die innere Erhöhung (9) oder Vertiefung (9') anschließt.

2. Filterplatte nach Anspruch 1,
**dadurch gekennzeichnet,**
**dass** die äußere Vertiefung (10) oder Erhöhung (10') die innere Erhöhung (9) oder Vertiefung (9') an ihrem gesamten Umfang umgibt.

3. Filterplatte nach Anspruch 2,
**dadurch gekennzeichnet,**
**dass** die äußere Vertiefung (10) oder Erhöhung (10') im Wesentlichen ringförmig ausgebildet ist.

4. Filterplatte nach einem der Ansprüche 1 bis 3,
**dadurch gekennzeichnet,**
**dass** über den Flächenbereich (2) eine Vielzahl von Distanzelementen (3,3') verteilt angeordnet sind.

5. Partikelfilter zur Abscheidung von Partikeln aus einem Abgasstrom einer Brennkraftmaschine, mit mehreren nebeneinander angeordnete Filterplatten (1, 1') gemäß einem der Ansprüche 1 bis 4, welche abwechselnd Einströmkanäle (5) und Ausströmkanäle (6) für den Abgasstrom bilden.

6. Partikelfilter nach Anspruch 5,
**dadurch gekennzeichnet,**
**dass** die Distanzelemente (3, 3') derart auf den Filterplatten (1, 1') angeordnet sind, dass sich die Distanzelemente (3, 3') benachbarter Filterplatten (1, 1') gegenseitig berühren.

7. Partikelfilter nach Anspruch 6,
**dadurch gekennzeichnet,**
**dass** die Filterplatten (1, 1') eine derartige Anordnung zueinander aufweisen, dass jeweils eine innere Erhöhung (9) der einen Filterplatte (1) auf der inneren Vertiefung (9') der benachbarten Filterplatte (1') oder eine äußere Vertiefung (10) der einen Filterplatte (1) auf der äußeren Erhöhung (10') der benachbarten Filterplatte (1') zu liegen kommt.

## Claims

1. Filter plate for a particulate filter designed for the removal of particulates from an exhaust gas stream of an internal combustion engine, which filter plate substantially consists of a gas-permeable carrier material coated with a sintered metal powder and has a surface region which substantially extends in a plane and on which is placed at least one spacer element (3, 3') having an internal elevation (9) or indentation (9') extending away from the surface region (2) in one direction,
**characterised in that**
the internal elevation (9) or indentation (9') has, in a top view of the filter plate, a substantially circular area, and **in that** the at least one spacer element (3, 3') has an external indentation (10) or elevation (10') which at least partially surrounds the internal elevation (9) or indentation (9') and extends away from the surface region (2) in the direction opposed to that of the internal elevation (9) or indentation (9'), the external indentation (10) or elevation (10') immediately adjoining the internal elevation (9) or indentation (9').

2. Filter plate according to claim 1,
**characterised in that**
the external indentation (10) or elevation (10') surrounds the internal elevation (9) or indentation (9') along its entire circumference.

3. Filter plate according to claim 2,
**characterised in that**
the external indentation (10) or elevation (10') is substantially annular.

4. Filter plate according to any of claims 1 to 3,
**characterised in that**
a plurality of spacer elements (3, 3') is distributed over the surface region (2).

5. Particulate filter designed for the removal of particulates from an exhaust gas stream of an internal combustion engine, comprising a plurality of filter plates (1, 1') according to any of claims 1 to 4, which are arranged adjacent to one another and which alternately form inflow passages (5) and outflow passages (6) for the exhaust gas stream.

6. Particulate filter according to claim 5,
**characterised in that**
the spacer elements (3, 3') are arranged on the filter plates (1, 1') in such a way that the spacer elements (3, 3') of adjacent filter plates (1, 1') are in mutual contact.

7. Particulate filter according to claim 6,
**characterised in that**
the filter plates (1, 1') are arranged relative to one another in such a way that an internal elevation (9) of one filter plate (1) comes to lie on the internal indentation (9') of the adjacent filter plate (1'), or that an external indentation (10) of one filter plate (1) comes to lie on the external elevation (10') of the adjacent filter plate (1').

## Revendications

1. Plaque filtrante destinée à un filtre à particules servant à séparer des particules d'un flux de gaz d'échappement d'un moteur à combustion interne, laquelle est constituée d'un matériau support perméable aux gaz pourvu d'un revêtement de poudre métallique frittée et qui présente une zone de surface s'étendant sensiblement dans un plan sur laquelle se trouve au moins un écarteur (3, 3'), lequel présente une partie saillante (9) ou une partie creuse (9') intérieure qui s'étend dans une direction s'éloignant de la zone de surface (2), **caractérisée en ce que** la partie saillante (9) ou la partie creuse (9') intérieure, en vue de dessus sur la plaque filtrante, présente une surface essentiellement circulaire et l'au moins un écarteur (3, 3') présente en outre une partie creuse (10) ou une partie saillante (10') extérieure qui s'étend dans le sens contraire de la partie saillante (9) ou la partie creuse (9') intérieure en s'éloignant de la zone de surface (2) et entoure au moins partiellement la partie saillante (9) ou la partie creuse (9') intérieure, la partie creuse (10) ou la partie saillante (10') extérieure se rattache directement à la partie creuse (9) ou la partie saillante (9') intérieure.

2. Plaque filtrante selon la revendication 1, **caractérisée en ce que** la partie creuse (10) ou la partie saillante (10') extérieure entoure la partie saillante (9) ou la partie creuse (9') intérieure sur toute sa circonférence.

3. Plaque filtrante selon la revendication 2, **caractérisée en ce que** la partie creuse (10) ou la partie saillante (10') extérieure est essentiellement circulaire.

4. Plaque filtrante selon l'une quelconque des revendications 1 à 3, **caractérisée en ce qu'**une pluralité d'écarteurs (3, 3') est répartie sur la zone de surface (2).

5. Plaque filtrante servant à séparer des particules d'un flux de gaz d'échappement d'un moteur à combustion interne, munie de plusieurs plaques filtrantes juxtaposées selon l'une quelconque des revendications 1 à 4, lesquelles forment alternativement des canaux d'entrée (5) et des canaux de sortie (6) pour le flux de gaz d'échappement.

6. Plaque filtrante selon la revendication 5, **caractérisée en ce que** les écarteurs (3, 3') sont disposés sur les plaques filtrantes (1, 1') de telle sorte que les écarteurs (3, 3') des plaques filtrantes adjacentes (1, 1') sont en contact mutuel.

7. Plaque filtrante selon la revendication 6, **caractérisée en ce que** les plaques filtrantes (1, 1') sont disposées de telle sorte que chaque pièce saillante (9) intérieure de l'une des plaques filtrantes (1) vienne se placer sur la partie creuse (9') intérieure de la plaque adjacente (1') ou une partie creuse (10) extérieure de l'une des plaques filtrantes (1) vienne se placer sur la partie saillante (10') extérieure de la plaque filtrante adjacente (1').
